# FASCICULE DE BREVET EUROPEEN

(11) **EP 2 603 886 B1**
(45) Date de publication et mention de la délivrance du brevet: **27.11.2019**
(21) Numéro de dépôt: 11755409.7
(22) Date de dépôt: 10.08.2011
(51) Int. Cl.: G06K 19/077, H01Q 1/22, H01Q 9/26

(54) **ANTENNE POUR UN DISPOSITIF ELECTRONIQUE D'UN PNEUMATIQUE**
ANTENNE FÜR EINE ELEKTRONISCHE VORRICHTUNG EINES REIFENS
ANTENNA FOR AN ELECTRONIC DEVICE OF A TYRE

(30) Priorité: 11.08.2010 FR 1056569
(43) Date de publication de la demande: 19.06.2013
(73) Titulaire: Compagnie Générale des Etablissements Michelin, 63000 Clermont-Ferrand (FR)
(72) Inventeur: ROBERT, Michel, F-63040 CLERMONT-FERRAND Cedex 9 (FR); SINNET, Jay Clifford, South Carolina 29605 (US)
(74) Mandataire: Roussy, Delphine
(86) Numéro de dépôt international: PCT/FR2011/051898
(87) Numéro de publication internationale: WO 2012/020202

(56) Documents cités:
- EP-A1- 1 454 770
- EP-A1- 1 942 445
- JP-A- 11 042 915
- US-A1- 2003 221 766
- US-A1- 2004 032 377

## Description

L'invention concerne le domaine des dispositifs électroniques pour pneumatique.

On connaît de l'état de la technique un dispositif électronique comprenant deux antennes reliées à un organe électronique, par exemple une puce, monté sur une platine. Chaque antenne présente une forme sensiblement hélicoïdale. Chaque antenne comprend une âme en acier revêtue directement d'un revêtement en laiton qui est un alliage de cuivre et de zinc dont les proportions sont respectivement de l'ordre de 75% et 25%. On pourra également se référer aux documents suivants de l'état de la technique, qui présentent des antennes formées dans différents matériaux : US 2003/221766 ; US 2004/032377 ; EP 1942445 ; EP 1454770 ; et JP 11 042915.

On sait que la conduction électromagnétique pour une telle antenne s'effectue principalement par un effet de peau, c'est-à-dire qu'elle est principalement assurée dans les couches extérieures de l'antenne. Cette épaisseur de peau est notamment fonction de la fréquence du rayonnement et du matériau constitutif de la couche de conduction. A titre d'exemple, pour une fréquence UHF (à titre d'exemple 915 MHz), l'épaisseur de peau est de 2,1 µm pour l'argent, de 2,2 µm pour le cuivre, de 4,4 µm pour le laiton.

Afin de fabriquer l'antenne, on met en forme une âme filiforme nue déroulée à partir d'une bobine de stockage en la déformant plastiquement pour lui donner une forme hélicoïdale. Puis, on revêt l'âme hélicoïdale nue du revêtement en laiton. L'étape de revêtement est effectuée dans un bain électrolytique.

Comme rappelé ci-dessus, pour un fonctionnement optimum d'une antenne revêtue de laiton aux fréquences UHF, l'épaisseur de la couche de revêtement ne doit pas être inférieure à 4 micromètres. En outre, de part sa géométrie hélicoïdale, les conditions de revêtement sur l'âme sont très difficiles à contrôler, notamment à l'intérieur de la spire. D'autre part, comme il s'agit d'un alliage, sa composition exacte est difficile à maîtriser et nécessite une régulation précise des paramètres du procédé de dépôt (intensités, temps de passage dans le bain, composition du bain). En synthèse, la qualité du dépôt associée aux épaisseurs nécessaires entraîne une durée de dépôt relativement longue avec une conséquence majeure sur l'aspect coût du produit.

L'invention a pour but de fournir un procédé industriellement robuste et à plus faible coût permettant d'obtenir une antenne présentant des caractéristiques optimales.

A cet effet, l'invention a pour objet une antenne comprenant une âme, l'antenne étant destinée à être intégrée dans une masse de gomme notamment d'un pneumatique, comprenant une couche de conduction d'un signal électromagnétique constituée de cuivre revêtant l'âme, une couche externe d'adhésion de l'antenne à la gomme, **caractérisée en ce qu**'une couche d'isolation chimique revêt la couche de conduction, destinée à isoler chimiquement la gomme de ce que revêt la couche d'isolation, et constituée d'un matériau différent du matériau constituant de la couche de conduction, la couche de conduction étant constituée de cuivre et la couche externe d'adhésion revêtant la couche d'isolation chimique.

L'antenne comprend une couche externe d'adhésion de l'antenne à la gomme revêtant la couche d'isolation chimique. Comme son nom l'indique, cette couche assure un contact intime durable entre la masse de gomme adjacente et l'antenne après une étape de réticulation de la masse de gomme.

L'utilisation de couches ayant deux fonctions dissociées, une fonction de conduction et une fonction d'isolation chimique, permet d'une part de choisir les matériaux adaptés à chacune des fonctions de façon dissociée en fonction de leurs caractéristiques, d'autre part d'en optimiser les épaisseurs et les paramètres procédés propres au dépôt de chaque couche (intensité, temps de passage dans le bain ou vitesse de défilement, composition du bain) et ainsi de diminuer les coûts associés au revêtement de l'âme.

La couche de conduction permet de conduire par effet de peau un signal électromagnétique entre l'antenne et l'organe électronique qui y est connecté. La couche de conduction est constituée de cuivre qui peut réagir avec les gommes du pneumatique. Un contact direct entre les deux entraînerait à la fois la détérioration de la couche de conduction et à terme la perte de la fonction électronique ainsi que la dégradation de la gomme environnante de l'antenne. La couche d'isolation chimique est inerte chimiquement du point de vue de la gomme. La couche d'isolation chimique permet ainsi d'empêcher les réactions chimiques entre la couche de conduction et la gomme environnante. En particulier, la couche de conduction étant constituée de cuivre, la couche d'isolation chimique permet d'assurer une barrière à la migration des espèces chimiques de la masse de gomme adjacente et notamment d'empêcher la sulfuration du cuivre.

Un métal sensiblement pur est un métal comprenant ledit métal dans une proportion supérieure à 95%, les au plus 5% restants ne constituant que des impuretés liées au procédé de fabrication du métal.

Il est à noter que le rendement d'une étape de dépôt d'un métal sensiblement pur tel le cuivre est beaucoup plus élevé que celui d'un alliage de métaux comme le laiton. En outre, le cuivre est un excellent conducteur électrique ce qui permet d'améliorer les performances de conduction de l'antenne.

Selon certaines caractéristiques optionnelles de l'antenne :
- L'âme est constituée d'acier.
- La couche de conduction revêt directement l'âme. En variante, on pourra revêtir l'âme nue par une ou plusieurs couches intermédiaires interposées entre l'âme nue et la couche de conduction. Dans une autre variante, on pourra revêtir l'âme nue par plusieurs couches de conduction, chaque couche de conduction étant constituée de cuivre. Dans cette autre variante, une des couches de conduction peut directement revêtir l'âme ou bien une couche intermédiaire interposée entre l'âme nue et cette couche de conduction.
- La couche d'isolation chimique est constituée d'un métal sensiblement pur ou d'un alliage de métaux, par exemple choisi parmi le zinc, le nickel, l'étain ou le laiton. Le rendement de l'étape de revêtement est beaucoup plus élevé lorsqu'on utilise un métal sensiblement pur. En outre, ces métaux ou le laiton sont inertes chimiquement vis-à-vis de la gomme et permettent une bonne adhérence de la couche d'isolation chimique sur la couche de conduction. En outre, ils permettent, dans le cas du zinc ou du nickel, une bonne adhérence de la couche d'isolation chimique avec la gomme. De plus, ces métaux ou le laiton permettent de connecter facilement l'antenne avec l'organe électronique, par exemple une puce, grâce à leurs propriétés de brasabilité. On notera qu'un alliage de métaux comprend généralement au moins deux métaux distincts majoritaires, c'est-à-dire constituant à eux deux plus de 50 % en masse de l'alliage, et des additifs apportant des propriétés spécifiques à l'alliage en fonction de son utilisation.

- La couche d'isolation chimique revêt directement la couche de conduction. En variante, on pourra revêtir la couche de conduction par une ou plusieurs couches intermédiaires interposées entre la couche de conduction et la couche d'isolation chimique. Dans une autre variante, on pourra revêtir la couche de conduction par plusieurs couches d'isolation chimique, chaque couche d'isolation chimique étant constituée d'un métal sensiblement pur ou d'un alliage de métaux, par exemple choisi parmi le zinc, le nickel, l'étain ou le laiton. Dans cette autre variante, une des couches d'isolation chimique peut directement revêtir la couche de conduction ou bien une couche intermédiaire interposée entre la couche de conduction et cette couche d'isolation chimique.
- L'épaisseur totale de la couche de conduction est supérieure à 2 micromètres, de préférence comprise entre 4 et 5 micromètres. Dans le cas où, l'antenne comprend plusieurs couches de conduction, l'épaisseur totale est l'addition des épaisseurs de chaque couche de conduction.
- L'épaisseur totale de la couche d'isolation chimique est supérieure à 0,2 micromètres, de préférence comprise entre 0,4 et 0,6 micromètres. Dans le cas où, l'antenne comprend plusieurs couches d'isolation chimique, l'épaisseur totale est l'addition des épaisseurs de chaque couche d'isolation chimique.
- La couche externe d'adhésion revêt directement la couche d'isolation chimique. En variante, on pourra revêtir la couche d'isolation chimique par une ou plusieurs couches intermédiaires interposées entre la couche d'isolation chimique et la couche d'adhésion. Dans une autre variante, on pourra revêtir la couche d'isolation chimique par plusieurs couches d'adhésion, chaque couche d'adhésion étant constituée d'au moins un métal sensiblement pur, par exemple choisi parmi le zinc ou le nickel ou d'un alliage de métaux, par exemple le laiton ou comprenant un adhésif non métallique. Dans cette autre variante, une des couches d'adhésion peut directement revêtir la couche d'isolation chimique ou bien une couche intermédiaire interposée entre la couche d'isolation chimique et cette couche d'adhésion.
- Dans un mode de réalisation, la couche externe d'adhésion comprend un adhésif non métallique.
- Dans un autre mode de réalisation, la couche externe d'adhésion est constituée d'un métal sensiblement pur, ou d'un alliage de métaux, par exemple choisi parmi le zinc, le nickel ou le laiton. Ces métaux permettent à l'antenne d'adhérer à la gomme environnante.
- L'antenne comprend au moins une portion hélicoïdale. L'antenne est de préférence destinée à être intégrée dans un pneumatique. Lors du fonctionnement du pneumatique, ce dernier est soumis à des contraintes et déformations qui sont transmises à l'antenne. La forme hélicoïdale permet d'améliorer l'endurance de l'antenne vis-à-vis des contraintes subies par l'antenne. En effet, la forme hélicoïdale confère à l'antenne une souplesse lui permettant de se déformer sans risque de rupture ce qui d'une part rendrait la fonction électronique inopérante et d'autre part présenterait un risque d'endommagement du pneumatique. De préférence, le diamètre extérieur de la portion hélicoïdale est de 1,2 mm et le pas de la portion hélicoïdale est de 13 spires par centimètre.

L'invention a également pour objet un dispositif électronique comprenant un organe électronique et au moins une antenne connectée à l'organe électronique, l'antenne étant telle que définie ci-dessus.

L'invention concerne également un pneumatique, comprenant une antenne telle que définie ci-dessus ou un dispositif électronique tel que défini ci-dessus.

Enfin, l'invention concerne un procédé de fabrication d'une antenne comprenant une âme, l'antenne étant destinée à être intégrée dans une masse de gomme, procédé dans lequel:
- on revêt l'âme d'une couche de conduction d'un signal électromagnétique constituée de cuivre,
- on revêt la couche de conduction d'une couche d'isolation chimique destinée à isoler chimiquement la gomme de ce que revêt la couche d'isolation chimique et constituée d'un matériau différent du matériau constituant la couche de conduction, et
- on revêt la couche d'isolation chimique d'une couche externe d'adhésion de l'antenne à la gomme.

Selon certaines caractéristiques optionnelles du procédé :
- Dans un mode de réalisation, on revêt l'âme présentant une forme filiforme des couches de conduction et d'isolation chimique, et postérieurement aux étapes de revêtement, on déforme plastiquement au moins une portion de l'âme revêtue. En revêtant l'âme avant sa déformation plastique, c'est-à-dire lorsque l'âme présente encore une forme filiforme, le rendement des étapes de revêtement est amélioré. En effet, l'âme étant filiforme, chaque revêtement peut recouvrir uniformément et de façon homogène l'âme de l'antenne. Ainsi, chaque étape de revêtement est relativement rapide, ce qui permet de limiter l'épaisseur de chaque couche et de diminuer les coûts énergétiques de chaque étape de revêtement tout en améliorant la qualité du revêtement. L'antenne ainsi obtenue est donc fonctionnelle.
- En outre, le procédé est continu, c'est-à-dire que l'étape de revêtement permet de recouvrir une grande longueur d'âme filiforme qui sera ensuite tronçonnée. Ainsi, à la différence d'une production par lot, le procédé selon l'invention permet d'assurer une qualité constante du produit, de réduire les interventions manuelles et donc les coûts.

Dans un autre mode de réalisation, on déforme plastiquement au moins une portion de l'âme, et postérieurement à l'étape de déformation, on revêt l'âme des couches de conduction et d'isolation chimique.

L'invention sera mieux comprise à la lecture de la description qui va suivre, donnée uniquement à titre d'exemple non limitatif et faite en se référant aux dessins dans lesquels :
- la figure 1 est une vue en perspective d'un dispositif électronique comprenant une antenne fabriquée selon un premier mode de réalisation de l'invention;
- la figure 2 est une vue de détails de l'antenne de la figure 1 ;
- les figures 3 à 6 sont des vues en perspective avec une coupe de l'antenne de la figure 2 au cours de différentes étapes du procédé de fabrication selon le premier mode de réalisation de l'invention;
- la figure 7 est une vue similaire à celle de la figure 2 au cours d'une étape de procédé succédant à celle des figures 3 à 6;
- la figure 8 est un schéma illustrant différentes étapes du procédé selon le premier mode de réalisation de l'invention;
- la figure 9 est une vue analogue de la figure 2 montrant une antenne selon un second mode de réalisation de l'invention;
- les figures 10 à 13 sont des vues en perspective avec une coupe de l'antenne de la figure 9 au cours de différentes étapes du procédé de fabrication selon le second mode de réalisation de l'invention;
- la figure 14 un schéma illustrant différentes étapes du procédé selon le second mode de réalisation de l'invention.

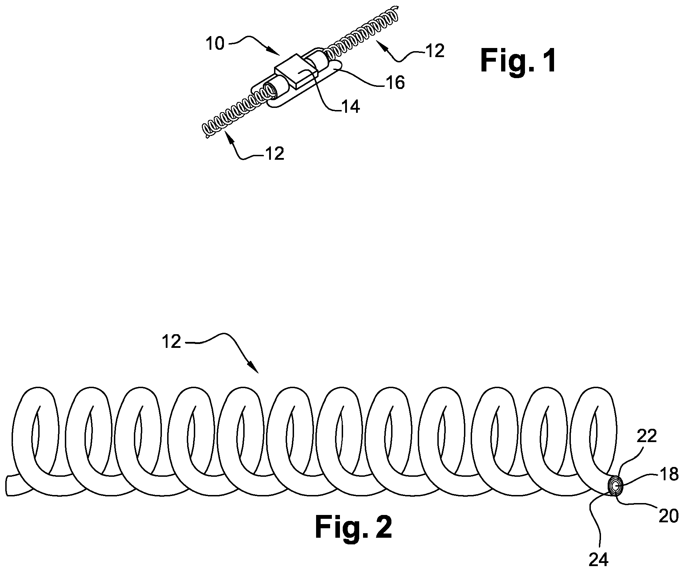

On a représenté sur la figure 1 un dispositif électronique désigné par la référence générale 10 et destiné à être enrobé de gomme. Dans l'exemple représenté, le dispositif électronique 10 est de type RFID et comprend deux antennes 12 selon un premier mode de réalisation. Les antennes 12 sont connectées à une borne d'un organe électronique 14, ici une puce, monté sur une platine 16. Dans ce qui suit, les deux antennes 12 étant identiques, on décrira une seule antenne 12 en référence à la figure 2. Les deux antennes 12 constituent une antenne dipôle.

L'antenne 12 présente une forme sensiblement hélicoïdale et présente une longueur, un diamètre extérieur et un pas d'hélice définis en fonction des conditions d'utilisation du dispositif électronique. A titre d'exemple, le pas de l'hélice peut être de 13 tours par centimètre, le diamètre extérieur de 1,2 mm et la longueur de l'ordre de 25 mm. Cette combinaison de caractéristiques est particulièrement utile dans le cas d'un fonctionnement du dispositif électronique dans un pneumatique aux fréquences UHF.

L'antenne 12 comprend une âme 18 en acier présentant un diamètre externe égal à 203 micromètres plus ou moins 5 micromètres. L'antenne 12 comprend également une première couche 20 de conduction revêtant directement l'âme 18. La couche 20 de conduction est constituée d'un métal sensiblement pur, en l'espèce de cuivre métallique (choisi pour ses caractéristiques électriques et son coût) et est au contact de l'âme 18. La couche 20 présente une épaisseur supérieure à 2 micromètres, de préférence comprise entre 4 et 5 micromètres.

L'antenne 12 comprend également une deuxième couche 22 d'isolation chimique revêtant directement la première couche 20. La couche 22 est constituée d'un métal sensiblement pur, en l'espèce du zinc métallique et est au contact de la première couche 20. La couche 22 présente une épaisseur supérieure à 0,2 micromètres, de préférence entre 0,4, et 0,6 micromètres.

En variante, la couche 22 est constituée de nickel ou d'étain.

Dans une autre variante, la couche 22 est constituée d'un alliage de métaux, par exemple du laiton.

Dans d'autres variantes, l'antenne 12 comprend plusieurs couches 22 d'isolation chimique, chaque couche étant constituée d'un métal sensiblement pur différent ou d'un alliage de métaux.

L'antenne 12 comprend également une troisième couche 24 d'adhésion revêtant directement la deuxième couche 22. La couche 24 comprend un adhésif non métallique, en l'espèce un adhésif commercialisé sous les marques « Chemlok » ou « Chemosil » par la société LORD CORPORATION et est au contact de la deuxième couche 22.

En variante, la troisième couche est constituée d'un métal sensiblement pur ou d'un alliage de métaux, par exemple choisi parmi le zinc, le nickel et le laiton.

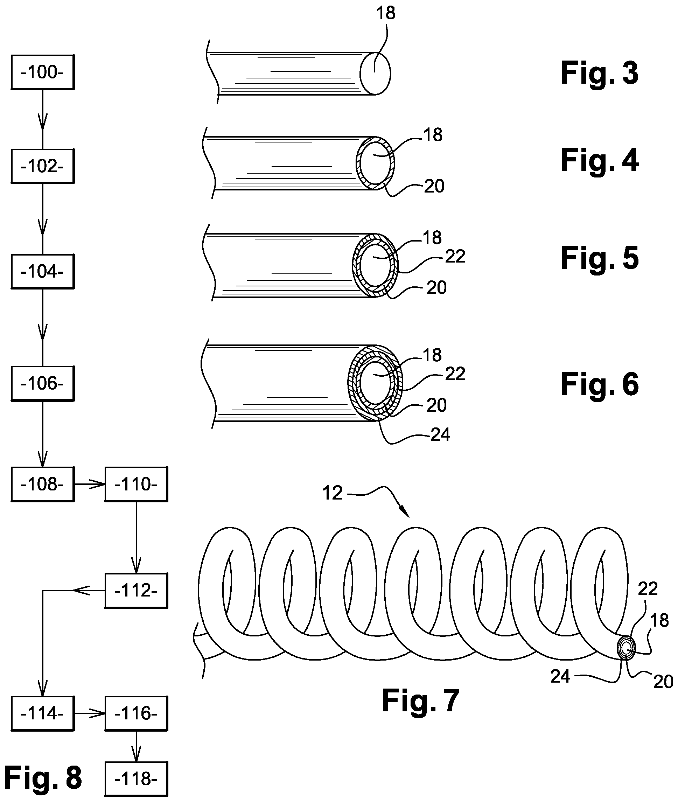

En référence aux figures 3 à 8, on va maintenant décrire les différentes étapes du procédé de fabrication selon le premier mode de réalisation de l'antenne 12 selon le premier mode de réalisation.

On dispose d'une bobine sur laquelle est enroulé un fil métallique filiforme comprenant l'âme 18. Cette âme 18 filiforme nue est représentée sur la figure 3.

Lors d'une première étape 100 de nettoyage, on fait passer l'âme 18 dans un bain alcalin.

Lors d'une étape 102, on revêt directement l'âme 18 de la première couche 20 de conduction par dépôt électrolytique en continu. On fait passer le fil dans un bain de cyanure pour le dépôt du cuivre. On obtient l'âme 18 revêtue de la couche 20 représentée sur la figure 4.

Puis, au cours d'une étape 104, on revêt directement la première couche 20 de la deuxième couche 22 d'isolation chimique, toujours par passage dans un bain électrolytique de composition appropriée au matériau de la couche d'isolation chimique. On obtient l'âme 18 revêtue des couches 20, 22 représentée sur la figure 5.

Ensuite, lors d'une étape 106, on revêt directement la deuxième couche 22 de la troisième couche 24 d'adhésion. On obtient l'âme revêtue des couches 20, 22, 24 représentée à la figure 6. Dans la variante dans laquelle la troisième couche est constituée d'un métal sensiblement pur ou d'un alliage de métaux, on dépose la troisième couche par un procédé dit « flash » ce qui correspond à un procédé d'électro-déposition relativement court permettant d'obtenir une troisième couche présentant une épaisseur inférieure à 0,1 micromètre. Un tel procédé « flash » utilise une densité de courant élevée ainsi qu'un bain à faible concentration ionique.

Puis, lors d'une étape 108, on nettoie (élimination des résidus des bains de dépôt, rinçage) et on sèche l'âme 18 revêtue des couches 20, 22 et 24 par passage dans un flux d'air propre et chaud.

Dans une étape 110, on contrôle la composition de chaque couche 20, 22, 24, par exemple par spectrométrie de fluorescence X ou par polarographie. On contrôle également l'épaisseur de chaque couche 20, 22, 24, par exemple par microscope à balayage électronique, polarographie, spectrométrie d'émission optique (ICP-AES étant le sigle anglais pour Inductive Coupled Plasma Absorption Emission Spectroscopy). On contrôle également l'aspect de surface de l'antenne 12 afin de vérifier l'uniformité du dépôt. Un test de caractérisation du potentiel d'endurance mécanique de l'âme et de l'adhérence des couches de revêtements peut également être pratiqué.

Ensuite, au cours d'une étape 112, on déforme plastiquement l'âme filiforme revêtue pour lui donner sa forme hélicoïdale au moyen d'une machine adaptée à la réalisation d'un tel ressort telle un tour à enrouler les ressorts. En l'espèce, l'âme revêtue des couches 20, 22 et 24 est déformée plastiquement en continu et sur toute sa longueur. On obtient alors l'âme revêtue des couches 20, 22 et 24 représentée sur la figure 7.

En variante, on déforme plastiquement uniquement une portion de l'âme revêtue des couches 20, 22 et 24 de façon périodique le long de l'âme revêtue des couches 20, 22 et 24.

Puis, lors d'une étape 114, on coupe l'âme 18 hélicoïdale revêtue en tronçons de longueur prédéterminée, ici de l'ordre de 20 à 30 millimètres.

Puis, lors d'une étape 116, on traite thermiquement l'antenne 12 par chauffage à une température d'au moins 200°C pendant 30 minutes pour obtenir une relaxation des contraintes mécaniques. On obtient alors l'antenne hélicoïdale 12 représentée sur la figure 2.

Enfin, lors d'une étape 118, on connecte l'antenne 12 à une borne de l'organe électronique 14 et à la platine 16 pour obtenir le dispositif 10 représenté sur la figure 1.

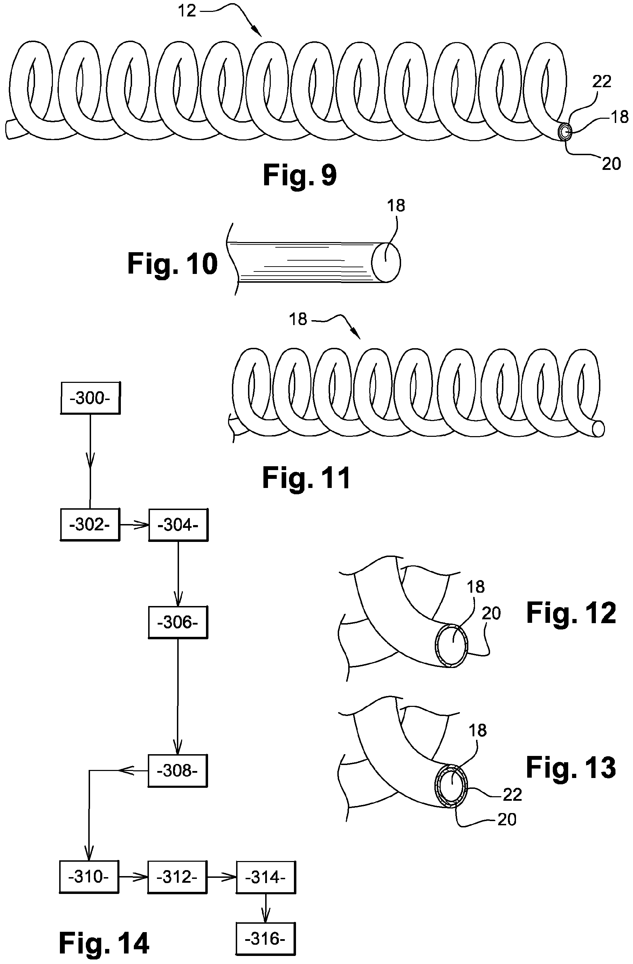

On a illustré sur les figures 9 à 14 une antenne et un procédé selon un second mode de réalisation de l'invention. Les éléments analogues à ceux de l'antenne et du procédé des précédents modes de réalisation sont désignés par des références identiques.

Comme précédemment et comme représenté sur la figure 9, l'antenne 12 comprend une couche de conduction 20 revêtant directement l'âme 18. La couche de conduction 20 est constituée d'un métal sensiblement pur, en l'espèce de cuivre métallique.

L'antenne 12 comprend également une couche d'isolation chimique 22 revêtant directement la couche de conduction 20. La couche d'isolation chimique 22 est constituée d'un alliage de métaux, en l'espèce du laiton.

En référence aux figures 10 à 14, on va maintenant décrire les différentes étapes du procédé de fabrication selon le second mode de réalisation de l'antenne.

On dispose d'une bobine sur laquelle est enroulé un fil métallique filiforme comprenant l'âme 18. Cette âme 18 filiforme nue est représentée sur la figure 10.

Lors d'une première étape 300, on déforme plastiquement l'âme filiforme nue 18 dans sa forme hélicoïdale au moyen d'un tour à enrouler les ressorts. En l'espèce, l'âme nue filiforme 18 est déformée plastiquement en continue et sur toute sa longueur. On obtient l'âme nue hélicoïdale représentée sur la figure 11.

En variante, on déforme plastiquement uniquement une portion de l'âme nue 18 de façon périodique le long de l'âme nue 18.

Puis, lors d'une étape 302 (relaxation de contraintes mécaniques), on traite thermiquement l'âme hélicoïdale nue 18 par chauffage à une température d'au moins 200°C pendant 30 minutes

Dans une étape de nettoyage 304, on nettoie et on sèche l'âme hélicoïdale nue 18 revêtue des couches 20 et 22. par trempe dans bains de nettoyage.

Lors d'une étape 306, on revêt directement l'âme hélicoïdale nue 18 de la première couche 20 de conduction. On obtient l'âme hélicoïdale revêtue de la couche 20 de conduction représentée sur la figure 12.

Puis, au cours d'une étape 308, on revêt directement la première couche 20 de la deuxième couche 22 d'isolation chimique. On obtient l'âme hélicoïdale revêtue des couches 20 de conduction et 22 d'isolation chimique représentée sur la figure 13.

Ensuite, lors d'une étape 310, on réalise optionnellement une étape de cuisson de l'âme hélicoïdale revêtue des couches 20, 22 à une température de l'ordre de 200°C pendant plusieurs heures. Cette étape permet de supprimer l'hydrogène dissous l'âme 18 et les couches 20, 22 et susceptibles de provoquer des cassures dans l'antenne 12.

Puis, dans une étape 312, on contrôle la composition de chaque couche 20, 22 d'une façon analogue à l'étape de contrôle du premier mode de réalisation.

Enfin, dans une étape 314, on coupe l'âme 18 hélicoïdale revêtue en tronçons de longueur prédéterminée.

Enfin, lors d'une étape 316, on connecte l'antenne 12 à l'organe électronique 14 et à la platine 16 pour obtenir un dispositif 10 analogue à celui représenté sur la figure 1.

L'invention ne se limite pas au mode de réalisation précédemment décrit.

En effet, on pourra déformer en totalité l'âme revêtue ou bien seulement une portion. En outre, on pourra déformer plastiquement plusieurs portions de l'âme revêtue de façons différentes.

Les étapes de revêtements utilisant des métaux ou alliages sont généralement mises en oeuvre dans des bains électrolytiques. En variante, elles pourront être mises en oeuvre par d'autres techniques connues.

## Revendications

1. Antenne (12) comprenant une âme (18), l'antenne (12) étant destinée à être intégrée dans une masse de gomme notamment d'un pneumatique, comprenant une couche (20) de conduction d'un signal électromagnétique revêtant l'âme (18), une couche externe (24) d'adhésion de l'antenne (12) à la gomme, **caractérisée en ce qu'**une couche (22) d'isolation chimique revêt la couche (20) de conduction, destinée à isoler chimiquement la gomme de ce que revêt la couche d'isolation (22), et constituée d'un matériau différent du matériau constituant de la couche (20) de conduction, la couche (20) de conduction étant constituée de cuivre et la couche externe (24) d'adhésion revêtant la couche (22) d'isolation chimique.

2. Antenne (12) selon la revendication 1, dans laquelle l'âme est constituée d'acier.

3. Antenne (12) selon l'une quelconque des revendications précédentes, dans laquelle la couche (20) de conduction revêt directement l'âme (18).

4. Antenne (12) selon l'une quelconque des revendications précédentes, dans laquelle la couche (22) d'isolation chimique revêt directement la couche (20) de conduction.

5. Antenne (12) selon l'une quelconque des revendications précédentes, dans laquelle la couche (22) d'isolation chimique est constituée d'un métal sensiblement pur ou d'un alliage de métaux, par exemple choisi parmi le zinc, le nickel, l'étain ou le laiton.

6. Antenne (12) selon la revendication 5, dans laquelle la couche (22) d'isolation chimique est constituée d'un métal sensiblement pur choisi parmi le zinc, le nickel, et l'étain, par exemple est constituée de nickel.

7. Antenne (12) selon l'une quelconque des revendications précédentes, dans laquelle l'épaisseur totale de la couche (20) de conduction est supérieure à 2 micromètres, de préférence comprise entre 4 et 5 micromètres.

8. Antenne (12) selon l'une quelconque des revendications précédentes, dans laquelle l'épaisseur totale de la couche (22) d'isolation chimique est supérieure à 0,2 micromètre, de préférence comprise entre 0,4 et 0,6 micromètre.

9. Antenne (12) selon l'une quelconque des revendications précédentes, dans laquelle la couche externe (24) d'adhésion revêt directement la couche (22) d'isolation chimique.

10. Antenne (12) selon l'une quelconque des revendications précédentes, dans laquelle la couche externe (24) d'adhésion comprend un adhésif non métallique.

11. Antenne (12) selon l'une quelconque des revendications précédentes, dans laquelle la couche externe (24) d'adhésion est constituée d'un métal sensiblement pur, ou d'un alliage de métaux, par exemple choisi parmi le zinc, le nickel et le laiton.

12. Antenne (12) selon l'une quelconque des revendications précédentes, comprenant au moins une portion hélicoïdale.

13. Antenne (12) selon la revendication précédente, dans laquelle le diamètre extérieur de la portion hélicoïdale est de 1,2 mm et dans laquelle le pas de la portion hélicoïdale est de 13 spires par centimètre.

14. Dispositif électronique (10) comprenant un organe électronique (14) et au moins une antenne (12) connectée à l'organe électronique (14), **caractérisé en ce que** l'antenne (12) est selon l'une quelconque des revendications précédentes.

15. Pneumatique, **caractérisé en ce qu'**il comprend une antenne selon l'une quelconque des revendications 1 à 13 ou un dispositif électronique (10) selon la revendication 14.

16. Procédé de fabrication d'une antenne (12) comprenant une âme (18), l'antenne (12) étant destinée à être intégrée dans une masse de gomme notamment de pneumatique, **caractérisé en ce que** :
- on revêt l'âme (18) d'une couche (20) de conduction d'un signal électromagnétique constituée de cuivre,
- on revêt la couche (20) de conduction d'une couche (22) d'isolation chimique destinée à isoler chimiquement la gomme de ce que revêt la couche (22) d'isolation chimique et constituée d'un matériau différent du matériau constituant de la couche (20) de conduction, et
- on revêt la couche (22) d'isolation chimique d'une couche externe (24) d'adhésion de l'antenne (12) à la gomme.

17. Procédé selon la revendication précédente, dans lequel on revêt l'âme (18) présentant une forme filiforme des couches de conduction (20) et d'isolation chimique (22), et postérieurement aux étapes de revêtement, on déforme plastiquement au moins une portion de l'âme (18) revêtue.

18. Procédé selon la revendication 16, dans lequel on déforme plastiquement au moins une portion de l'âme (18), et postérieurement à l'étape de déformation, on revêt l'âme (18) des couches de conduction (20) et d'isolation chimique (22).

## Patentansprüche

1. Antenne (12), die eine Seele (18) umfasst, wobei die Antenne (12) dazu bestimmt ist, in eine Gummimasse, insbesondere eines Reifens, integriert zu werden, umfassend eine Leitungsschicht (20) zum Leiten eines elektromagnetischen Signals, welche die Seele (18) überzieht, eine äußere Haftschicht (24) zur Haftung der Antenne (12) am Gummi, **dadurch gekennzeichnet, dass** eine Schicht (22) zur chemischen Isolation die Leitungsschicht (20) überzieht, dazu bestimmt ist, das Gummi von dem, was die Isolationsschicht (22) überzieht, chemisch zu isolieren, und aus einem anderen Material als die Leitungsschicht (20) besteht, wobei die Leitungsschicht (20) aus Kupfer besteht und die äußere Haftschicht (24) die Schicht (22) zur chemischen Isolation überzieht.

2. Antenne (12) nach Anspruch 1, bei der die Seele aus Stahl besteht.

3. Antenne (12) nach einem der vorhergehenden Ansprüche, bei der die Leitungsschicht (20) die Seele (18) direkt überzieht.

4. Antenne (12) nach einem der vorhergehenden Ansprüche, bei der die Schicht (22) zur chemischen Isolation die Leitungsschicht (20) direkt überzieht.

5. Antenne (12) nach einem der vorhergehenden Ansprüche, bei der die Schicht (22) zur chemischen Isolation aus einem im Wesentlichen reinen Metall oder aus einer Metalllegierung besteht, das bzw. die zum Beispiel unter Zink, Nickel, Zinn oder Messing gewählt ist.

6. Antenne (12) nach Anspruch 5, bei der die Schicht (22) zur chemischen Isolation aus einem im Wesentlichen reinen Metall besteht, das unter Zink, Nickel und Zinn gewählt ist, zum Beispiel aus Nickel besteht.

7. Antenne (12) nach einem der vorhergehenden Ansprüche, bei der die Gesamtdicke der Leitungsschicht (20) mehr als 2 Mikrometer, bevorzugt zwischen 4 und 5 Mikrometer beträgt.

8. Antenne (12) nach einem der vorhergehenden Ansprüche, bei der die Gesamtdicke der Schicht (22) zur chemischen Isolation mehr als 0,2 Mikrometer, bevorzugt zwischen 0,4 und 0,6 Mikrometer beträgt.

9. Antenne (12) nach einem der vorhergehenden Ansprüche, bei der die äußere Haftschicht (24) die Schicht (22) zur chemischen Isolation direkt überzieht.

10. Antenne (12) nach einem der vorhergehenden Ansprüche, bei der die äußere Haftschicht (24) ein nichtmetallisches Haftmittel umfasst.

11. Antenne (12) nach einem der vorhergehenden Ansprüche, bei der die äußere Haftschicht (24) aus einem im Wesentlichen reinen Metall oder aus einer Metalllegierung besteht, das bzw. die zum Beispiel unter Zink, Nickel und Messing gewählt ist.

12. Antenne (12) nach einem der vorhergehenden Ansprüche, umfassend mindestens einen schraubenlinienförmigen Abschnitt.

13. Antenne (12) nach dem vorhergehenden Anspruch, bei welcher der Außendurchmesser des schraubenlinienförmigen Abschnitts 1,2 mm beträgt und bei der die Steigung des schraubenlinienförmigen Abschnitts 13 Windungen je Zentimeter beträgt.

14. Elektronische Vorrichtung (10), umfassend ein elektronisches Element (14) und mindestens eine Antenne (12), die mit dem elektronischen Element (14) verbunden ist, **dadurch gekennzeichnet, dass** die Antenne (12) die Merkmale eines der vorhergehenden Ansprüche aufweist.

15. Reifen, **dadurch gekennzeichnet, dass** er eine Antenne nach einem der Ansprüche 1 bis 13 oder eine elektronische Vorrichtung (10) nach Anspruch 14 umfasst.

16. Verfahren zur Herstellung einer Antenne (12), die eine Seele (18) umfasst, wobei die Antenne (12) dazu bestimmt ist, in eine Gummimasse, insbesondere eine Reifengummimasse, integriert zu werden, **dadurch gekennzeichnet, dass**:
- man die Seele (18) mit einer Leitungsschicht (20) zum Leiten eines elektromagnetischen Signals überzieht, die aus Kupfer besteht,
- man die Leitungsschicht (20) mit einer Schicht (22) zur chemischen Isolation überzieht, die dazu bestimmt ist, das Gummi von dem, was die Schicht (22) zur chemischen Isolation überzieht, chemisch zu isolieren, und aus einem anderen Material als die Leitungsschicht (20) besteht, und
- man die Schicht (22) zur chemischen Isolation mit einer äußeren Haftschicht (24) zur Haftung der Antenne (12) am Gummi überzieht.

17. Verfahren nach dem vorhergehenden Anspruch, bei dem man die Seele (18), die eine fadenförmige Form aufweist, mit der Leitungsschicht (20) und der Schicht (22) zur chemischen Isolation überzieht und man nach den Schritten des Überziehens zumindest einen Abschnitt der überzogenen Seele (18) plastisch verformt.

18. Verfahren nach Anspruch 16, bei dem man zumindest einen Abschnitt der Seele (18) plastisch verformt und man nach dem Schritt des Verformens die Seele (18) mit der Leitungsschicht (20) und der Schicht (22) zur chemischen Isolation überzieht.

## Claims

1. Antenna (12) comprising a core (18), the antenna (12) being intended to be integrated into a rubber compound, especially for a tyre, **characterized in that** it comprises:
- an electromagnetic-signal conduction layer (20) coating the core (18);
- an external adhesion layer (24) for the antenna to adhere to the rubber, and
**Characterized in that** a chemical isolation layer (22) coating the conduction layer (20), intended to chemically isolate the rubber from what the isolation layer (22) coats and made of a different material from the material constituting the conduction layer (20) **in that** the conduction layer (20) is made of copper and **in that** the external adhesion layer (24) coats the chemical isolation layer (22).

2. Antenna (12) according to Claim 1, in which the core is made of steel.

3. Antenna (12) according to either of the preceding Claims, in which the conduction layer (20) coats the core (18) directly.

4. Antenna (12) according to any one of the preceding Claims, in which the chemical isolation layer (22) coats the conduction layer (20) directly.

5. Antenna (12) according to any one of the preceding Claims, in which the chemical isolation layer (22) is made of a substantially pure metal or an alloy of metals, for example chosen from zinc, nickel, tin and brass.

6. Antenna (12) according to Claim 5 in which the chemical isolation layer (22) is made of a substantially pure metal chosen from zinc, nickel and tin, for example made of nickel.

7. Antenna (12) according to any one of the preceding Claims, in which the total thickness of the conduction layer (20) is greater than 2 microns, preferably between 4 and 5 microns.

8. Antenna (12) according to any one of the preceding Claims, in which the total thickness of the chemical isolation layer (22) is greater than 0.2 microns, preferably between 0.4 and 0.6 microns.

9. Antenna (12) according to any one of the preceding Claims, which the external adhesion layer (24) for the antenna (12) to adhere to the rubber coats the chemical isolation layer (22) directly.

10. Antenna (12) according to any one of the preceding Claims, in which the external adhesion layer (24) comprises a non-metallic adhesive.

11. Antenna (12) according to any one of the preceding Claims, in which the external adhesion layer (24) is made of a substantially pure metal or an alloy of metals, for example chosen from zinc, nickel and brass.

12. Antenna (12) according to any one of the preceding Claims, which includes at least one helical portion.

13. Antenna (12) according to Claim 12, in which the outside diameter of the helical portion is 1.2 mm and in which the pitch of the helical portion is 13 turns per centimetre.

14. Electronic device (10) comprising an electronic member (14) and at least one antenna (12) connected to the electronic member (14), **characterized in that** the antenna (12) is according to any one of the preceding Claims.

15. Tyre, **characterized in that** it comprises an antenna according to any one of Claims **Erreur** ! **Source du renvoi introuvable.** to 13 or an electronic device (10) according to Claim 14.

16. Process for manufacturing an antenna (12) comprising a core (18), the antenna (12) being intended to be integrated into a rubber compound, especially for a tyre, **characterized in that:**
- the core (18) is coated with an electromagnetic-signal conduction layer (20) made of copper;
- the conduction layer (20) is coated with a chemical isolation layer (22) intended for chemically isolating the rubber from what the chemical isolation layer (22) coats and made of a different material from the material constituting the conduction layer (20); and
- The chemical isolation layer (22) is coated with an external adhesion layer (24) to adhere to the rubber.

17. Process according to Claim 16, in which the core (18) having a filiform shape is coated with the conduction layer (20) and the chemical isolation layer (22) and, after the coating steps, at least one portion of the coated core (18) is plastically deformed.

18. Process according to Claim 16, in which at least one portion of the core (18) is plastically deformed and, after the deformation step, the core (18) is coated with the conduction layer (20) and the chemical isolation layer (22).
